# EUROPÄISCHE PATENTANMELDUNG

(11) **EP 1 560 246 A1**
(43) Veröffentlichungstag der Anmeldung: **03.08.2005**
(21) Anmeldenummer: 04030166.5
(22) Anmeldetag: 20.12.2004
(51) Int. Cl.: H01J 5/56, H01K 3/32, F21V 19/00, F21S 8/10

(54) **Fahrzeugscheinwerferlampe, Montagehilfe für eine Fahrzeugscheinwerferlampe und Beleuchtungseinheit mit einer Fahrzeugscheinwerferlampe und einer Montagehilfe**

(30) Priorität: 19.01.2004 DE 102004002790
(71) Anmelder: Patent-Treuhand-Gesellschaft für Elektrische Glühlampen mbH, 81543 München (DE)
(72) Erfinder: Helbig, Peter, 89567 Sontheim (DE); Wild, Hans, 89547 Gerstetten (DE)

(57) **Zusammenfassung**

Die Erfindung betrifft eine Fahrzeugscheinwerferlampe mit einem Sockel, der Befestigungsmittel zum Anbringen einer Montagehilfe für die Montage der Fahrzeugscheinwerferlampe in einem Fahrzeugscheinwerfer aufweist sowie eine Montagehilfe für eine Fahrzeugscheinwerferlampe, die mit Befestigungsmitteln zu ihrer Befestigung an dem Sockel einer Fahrzeugscheinwerferlampe ausgestattet ist und derart geformt ist, dass sie auf den Sockel aufsteckbar ist, im aufgesteckten Zustand eine Verlängerung des Sockels in Richtung der Längserstreckung der Fahrzeugscheinwerferlampe bewirkt und das Ausüben eines Drehmoments auf den Sockel zum Einsetzen der Fahrzeugscheinwerferlampe in die Lampenfassung des Scheinwerfers ermöglicht.

## Beschreibung

Die Erfindung betrifft eine Fahrzeugscheinwerferlampe gemäß des Oberbegriffs des Patentanspruchs 1, eine Montagehilfe für eine derartige Fahrzeugscheinwerferlampe und eine Beleuchtungseinheit mit einer Fahrzeugscheinwerferlampe und einer Montagehilfe.

### I. Stand der Technik

Eine derartige Fahrzeugscheinwerferlampe ist beispielsweise in der Offenlegungsschrift DE 101 48 114 A1 offenbart. Diese Schrift beschreibt eine Fahrzeugscheinwerferlampe mit zwei innerhalb eines Lampengefäßes angeordneten Glühwendeln und einem Sockel, der mit den elektrischen Anschlüssen der Lampe ausgestattet ist. Die elektrischen Anschlüsse sind als Kontaktfahnen ausgebildet, die sich radial zur Lampenachse erstrecken. Der Sockel weist ein Griffteil auf, das die Montage und Kontaktierung der Lampe in der Fassung des Scheinwerfers erleichtert.

Die Lampe ist allerdings nicht ohne Hilfsmittel in Scheinwerfer mit einer großen Bautiefe einsetzbar, das heißt, bei denen die Lampenfassung tief im Inneren des Scheinwerfers angeordnet ist.

### II. Darstellung der Erfindung

Es ist die Aufgabe der Erfindung, eine Fahrzeugscheinwerferlampe bereitzustellen, die mittels einer Montagehilfe in Scheinwerfer großer Bautiefe einsetzbar ist, und eine entsprechende Montagehilfe für Fahrzeugscheinwerferlampen bereitzustellen sowie eine Beleuchtungseinheit mit einer Fahrzeugscheinwerferlampe und einer Montagehilfe bereitzustellen.

Diese Aufgabe wird erfindungsgemäß durch die Merkmale des Patentanspruchs 1 bzw. 5 oder 9 gelöst. Besonders vorteilhafte Ausführungen der Erfindung sind in den abhängigen Patentansprüchen beschrieben.

Die erfindungsgemäße Fahrzeugscheinwerferlampe weist mindestens ein Leuchtmittel, das in einem Lampengefäß eingeschlossen ist und einen Sockel auf, der mit den elektrischen Anschlüssen der Lampe ausgestattet ist, wobei der Sockel erfindungsgemäß mit Befestigungsmitteln zum Anbringen einer Montagehilfe für die Montage der Lampe in einem Fahrzeugscheinwerfer versehen ist. Die erfindungsgemäß Montagehilfe ist ebenfalls mit Befestigungsmitteln zu ihrer Befestigung an dem Sockel der Fahrzeugscheinwerferlampe ausgestattet und derart geformt, dass sie auf den Sockel aufsteckbar ist, im aufgesteckten Zustand eine Verlängerung des Sockels in Richtung der Längserstreckung der Fahrzeugscheinwerferlampe bewirkt und das Ausüben eines Drehmoments auf den Sockel zum Einsetzen der Fahrzeugscheinwerferlampe in die Lampenfassung des Scheinwerfers ermöglicht. Dadurch kann die Lampe mittels der Montagehilfe in Fahrzeugscheinwerfer großer Bautiefe montiert werden.

Die Befestigungsmittel an dem Lampensockel und an der Montagehilfe sind aufeinander abgestimmt. Die Befestigungsmittel am Sockel und an der Montagehilfe umfassen in vorteilhafter Weise Noppen bzw. Vertiefungen, die das Herstellen einer Rastverbindung zwischen dem Sockel und der Montagehilfe ermöglichen. Außerdem sind in vorteilhafter Weise an dem Sockel oder an der Montagehilfe Führungselemente vorgesehen, die eine lagerichtige Befestigung der Montagehilfe an dem Sockel erleichtern. Die Montagehilfe besitzt in vorteilhafter Weise mindestens ein Paar von Federelementen, zwischen denen der Sockel mit Klemmsitz fixierbar ist. Dadurch wird ein Herausgleiten der Lampe aus der Montagehilfe während des Einsetzens der Lampe in die Scheinwerferfassung verhindert. Zur stabilen Halterung der Lampe in der Montagehilfe während der Montage der Lampe in dem Scheinwerfer ist ein Ende der Montagehilfe in vorteilhafter Weise mit einer auf den Sockel abgestimmten Aufnahme versehen. Vorzugsweise ist dieses Ende der Montagehilfe klammerartig ausgebildet und auf die Geometrie und Maße des Sockels abgestimmt, um eine zuverlässige Umklammerung des Sockels während der Lampenmontage zu gewährleisten.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine Draufsicht auf eine Montagehilfe gemäß des bevorzugten Ausführungsbeispiels der Erfindung
- Figur 2: Eine Seitenansicht der in Figur 1 abgebildeten Montagehilfe
- Figur 3: Die Rückseite der in Figur 1 abgebildeten Montagehilfe
- Figur 4: Die Vorderseite der in Figur 1 abgebildeten Montagehilfe
- Figur 5: Eine Seitenansicht einer Fahrzeugscheinwerferlampe gemäß des bevorzugten Ausführungsbeispiels der Erfindung

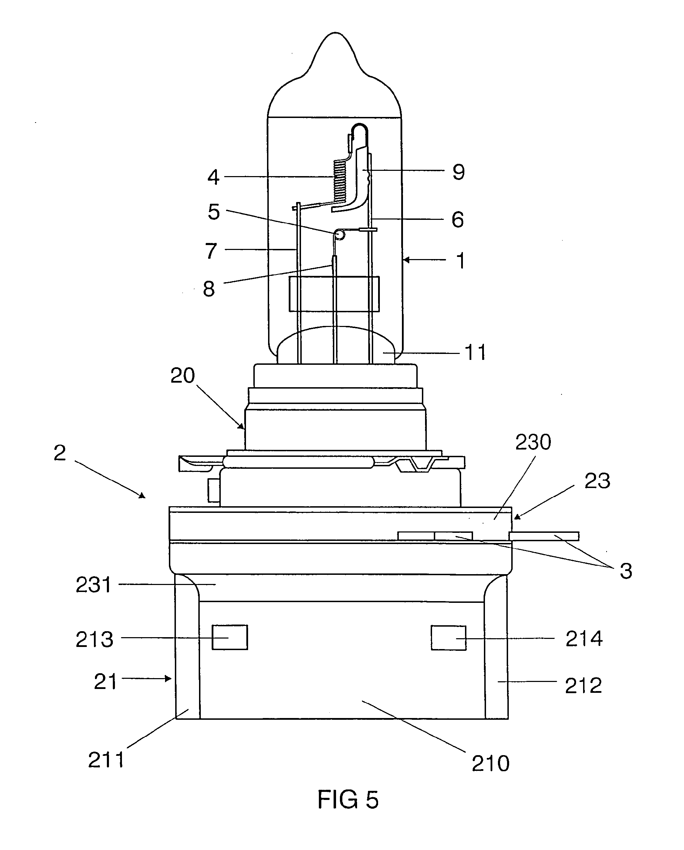

Bei der in Figur 5 schematisch dargestellten Fahrzeugscheinwerferlampe gemäß des bevorzugten Ausführungsbeispiels der Erfindung handelt es sich um eine Halogenglühlampe, die zum Einsatz in einen Kraftfahrzeugscheinwerfer zur Erzeugung des Abblendlichts und des Fernlichts vorgesehen ist.

Diese Halogenglühlampe besitzt ein gläsernes, im wesentlichen zylindrisches Lampengefäß 1, das an einem Ende mittels eines Quetschfußes 11 abgedichtet ist. Der Quetschfuß 11 ist in einem Sockel 2 fixiert, aus dem die elektrischen Kontakte 3 der Lampe in radialer Richtung, das heißt, senkrecht zur Längsachse der Lampe herausragen. Das vom LampengeFäß 1 abgewandte Ende des Sockels 2 besteht aus Kunststoff und ist als Griffteil 21 ausgebildet, während das andere Ende 20 des Sockels, in dem der Quetschfuß 11 fixiert ist, aus Metall besteht. Innerhalb des Lampengefäßes 1 sind zwei Glühwendeln 4, 5 angeordnet, deren Wendelabgänge über Stromzuführungsdrähten 6, 7, 8 mit den elektrischen Kontakten 3 verbunden sind. Das von Glühwendel 4 emittierte Licht wird teilweise mittels einer im Innenraum des Lampengefäßes angeordneten Abblendkappe 9 abgeschattet. Bei dem Griffteil 21 handelt es sich im wesentlichen um einen Steg, der sich quer zur Längsachse der Lampe über den gesamten Durchmesser des Sockels 2 erstreckt. Das Griffteil 21 weist an seinen beiden parallel zur Längsachse der Lampe verlaufenden Seitenkanten 211, 212 eine größere Dicke als sein Mittelteil 210 auf. Die Dicke des Griffteils 21 nimmt, ausgehend von einem Maximalwert an den Seitenkanten 211, 212 in Richtung zu seinem Mittelteil 210 kontinuierlich auf die Dicke des Mittelteils 210 ab. In der Oberfläche des Mittelteils 210 sind auf beiden Seiten des Griffteils 21 jeweils zwei Vertiefungen 213, 214 angeordnet, die zusammen mit entsprechend darauf abgestimmten Noppen an der unten beschriebenen Montagehilfe zur Herstellung einer Rastverbindung dienen. In Richtung des Lampengefäßes 1 wird das Griffteil 21 durch einen stufenförmig ausgebildeten kreiszylindrischen Kunststoffring 23 begrenzt, aus dem die Kontakte 3 herausragen. Die im Vergleich zum Mittelteil 210 verdickten Seitenkanten 211, 212 sind zu beiden Seiten der vom Lampengefäß 1 abgewandten unteren Stufe 231 des zylindrischen Kunststoffrings 23 angeordnet. Der Außendurchmesser der unteren Stufe 231 des Kunststoffringes ist um die Breite der Seitenkanten 211, 212 kleiner als der Außendurchmesser der dem Lampengefäß 1 zugewandten oberen Stufe 230 des Kunststoffringes 23.

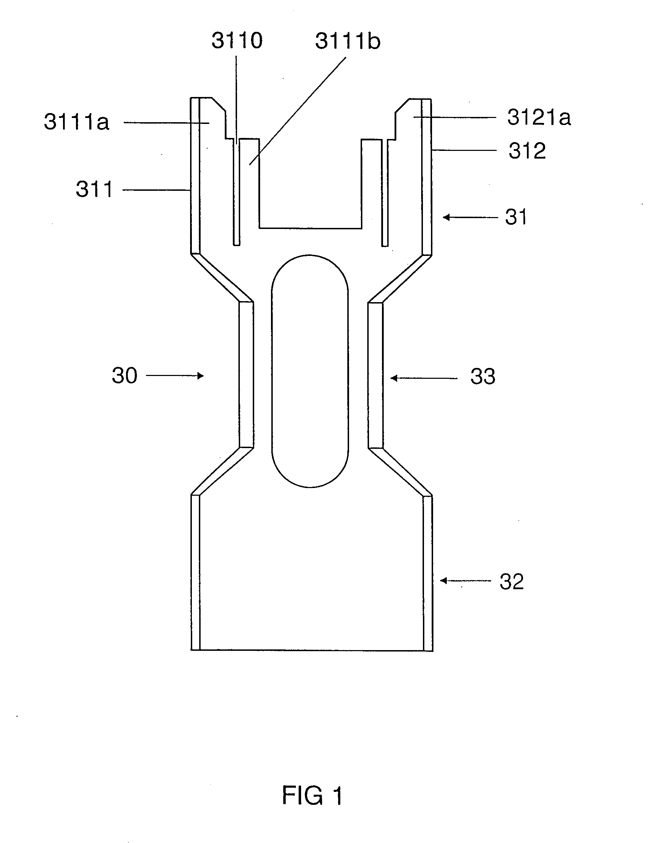

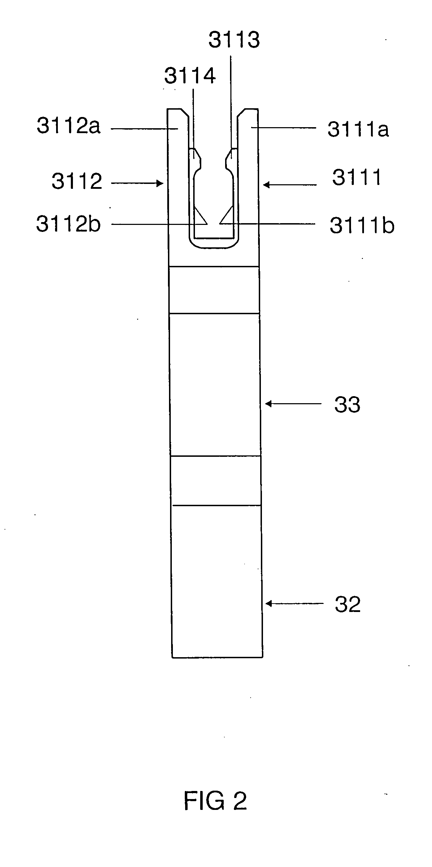

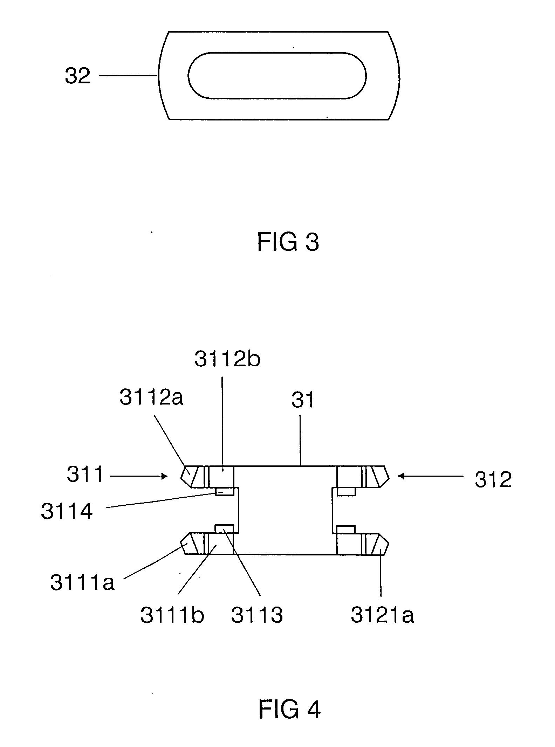

In den Figuren 1 bis 4 ist das bevorzugte Ausführungsbeispiel der erfindungsgemäßen Montagehilfe 30 dargestellt, die zur Montage der oben beschriebenen Halogenglühlampe in einem Fahrzeugscheinwerfer dient. Die Montagehilfe 30 besteht aus einem steifen Kunststoff und ist ausreichend starr, um mittels ihr ein Drehmoment auf den Sockel 2 auszuüben, das ausreicht, die Lampe in die Fassung des Fahrzeugscheinwerfers einzudrehen. Zu diesem Zweck besitzt die Montagehilfe 30 ein erstes, klammerartig ausgebildetes Ende 31, das auf den Sockel 2 und insbesondere auf das Griffteil 21 aufsteckbar ist, und ein diametral dazu angeordnetes, zweites Ende 32, das als Griff ausgebildet ist. Die beiden Enden 31, 32 der Montagehilfe 30 sind durch ein starres Mittelstück 33 miteinander verbunden. Die Montagehilfe 30 bewirkt dadurch im aufgesteckten Zustand eine Verlängerung des Sockels 2. Das klammerartig ausgebildete Ende 31 der Montagehilfe 30 besitzt zwei U-förmige Klammern 311, 312, die an zwei gegenüberliegenden Seiten der. Montagehilfe 30 angeordnet sind.

Der Abstand der beiden U-Schenkel 3111, 3112 der Klammern 311 ist auf die Dicke des Griffteils 21 des Sockels 2 abgestimmt. Das gleiche gilt auch für den Abstand der nicht mit Bezugszeichen versehenen U-Schenkel der Klammer 312. Die beiden U-Schenkel 3111, 3112 der Klammer 311 sind jeweils mit einem in ihrer Längsrichtung verlaufenden Schlitz 3110 versehen, die den jeweiligen U-Schenkel 3111 bzw. 3112 in zwei unterschiedlich lange Stege 3111a und 3111b bzw. 3112a und 3112b zerlegen. Die kürzeren, innen liegenden Stege 3111b und 3112b sind federnd ausgebildet. Sie 3111b, 3112b sind jeweils an ihrem freien Ende mit einer Noppe 3113, 3114 ausgestattet, die beim Aufstecken der Montagehilfe 30 auf den Sockel 2 der Lampe in die entsprechend geformten Vertiefungen 213 bzw. 214 in der Oberfläche des Griffteils 21 eingreifen und mit diesen eine Rastverbindung eingehen. Der Abstand der Stege 3111b, 3112b ist auf die Dicke des Mittelteils 210 des Griffteils 21 des Sockels 2 abgestimmt. Die federnd ausgebildeten Stege 3111b und 3112b liegen dann an dem Mittelteil 210 des Griffteils 21 des Sockels 2 an, so dass das Griffteil 21 bei aufgesteckter Montagehilfe 30 mit Klemmsitz zwischen den beiden Stegen 3111b und 3112b angeordnet ist. Die außenliegenden, längeren Stege 3111a und 3112a der U-förmigen Klammer 311 dienen beim Aufstecken der Montagehilfe 30 als Führungsstege. Sie decken in diesem Fall die verdickte Seitenkante 211 des Griffteils 21 des Sockels 2 ab und ihre freien Enden stoßen an den Kunststoffring 23 an. Der Abstand zwischen den außenliegenden, längeren Stegen 3111a und 3121a der beiden spiegelsymmetrisch ausgebildeten Klammern 311 und 312 entspricht dem Außendurchmesser der vom Lampengefäß 1 abgewandten Stufe 231 des kreiszylindrischen Kunststoffrings 23 des Sockels 2. Bei auf dem Sockel 2 aufgesteckter Montagehilfe 30 ist die vorgenannte Stufe 231 des Kunststoffrings 23 zwischen den vorgenannten Stegen 3111a, 3121a der beiden U-förmigen Klammern 311 und 312 angeordnet. Die insgesamt vier außenliegenden, längeren Stege 3111a, 3111b und 3121a der beiden Klammern 311 und 312 dienen auch als Führungselemente beim Aufstecken der Montagehilfe 30 auf den Sockel 2. Zu diesem Zweck sind ihre freien Enden mit Einfädelungsschrägen versehen. Außerdem ermöglichen diese stabil ausgebildeten Stege 3111a, 3111b und 3121a das Übertragen eines Drehmomentes auf den Sockel 2, um die Lampe in die Fassung des Scheinwerfers eindrehen zu können.

Nachstehend sind einige Maße der Montagehilfe 30 aufgelistet. Die größte Länge der Montagehilfe 30 beträgt 70 mm. Ihre größte Breite beträgt 30,5 mm. Ihre größte Dicke beträgt 11 mm. Der Abstand zwischen den federnd ausgebildeten, innenliegenden Stegen der beiden Klammern 311 und 312 beträgt 13 mm. Die Länge der innenliegenden Stege 3111b, 3112b beträgt 16,2 mm. Die freien Enden der außenliegenden Stege 3111a und 3112a überragen die freien Enden der innenliegenden Stege 3111b, 3112b um 5,2 mm. Der Abstand zwischen den innenliegenden, zur gleichen Klammer 311 gehörenden Stegen 3111b, 3112b beträgt 5,75 mm. Im Bereich ihrer Noppen 3113, 3114 beträgt ihr Abstand nur 3,4 mm. Das als Griffteil geformte Ende 32 der Montagehilfe 30 ist hohl ausgebildet.

Die Montagehilfe 30 kann nach dem Einsetzen der Lampe in die Fassung des Scheinwerfers wieder von dem Sockel 2 abgezogen werden oder auch auf dem Sockel aufgesteckt bleiben. Die Rastverbindung zwischen dem Sockel 2 und den federnd ausgebildeten Stegen der Klammern 311 und 312 kann durch Ziehen an dem als Griff ausgebildeten Ende 32 der Montagehilfe 30 gelöst werden.

Die Erfindung beschränkt sich nicht auf das oben näher erläuterte Ausführungsbeispiel. Die Gestalt des Endes 31 der Montagehilfe 30 kann variieren. Sie muss an die Gestalt des Lampensockels 2 angepasst werden. Anstelle des klammerartigen Endes 31 kann die Montagehilfe 30 beispielsweise auch eine auf die Geometrie und Maße des Lampensockels 2 angepasste Aussparung aufweisen.

## Patentansprüche

1. Fahrzeugscheinwerferlampe mit mindestens einem Leuchtmittel, das in einem Lampengefäß (1) eingeschlossen ist und einem Sockel (2), der mit den elektrischen Anschlüssen (3) der Lampe ausgestattet ist,
**dadurch gekennzeichnet, dass** der Sockel (2) Befestigungsmittel zum Anbringen einer Montagehilfe (30) für die Montage der Fahrzeugscheinwerferlampe in einem Fahrzeugscheinwerfer aufweist.

2. Fahrzeugscheinwerferlampe nach Anspruch 1, **dadurch gekennzeichnet, dass** die Befestigungsmittel Vertiefungen (213, 214) oder Noppen an der Oberfläche des Sockels (2) umfassen, die zum Herstellen einer Rastverbindung mit an der Montagehilfe (30) angeordneten Befestigungsmitteln dienen.

3. Fahrzeugscheinwerferlampe nach Anspruch 1, **dadurch gekennzeichnet, dass** am Sockel (2) Führungselemente (231, 211, 212) vorgesehen sind, die zur lagerichtigen Befestigung der Montagehilfe (30) am Sockel (2) der Fahrzeugscheinwerferlampe dienen.

4. Montagehilfe zur Montage einer Fahrzeugscheinwerferlampe in einem Fahrzeugscheinwerfer, die mit Befestigungsmitteln zu ihrer Befestigung an dem Sockel (2) einer Fahrzeugscheinwerferlampe ausgestattet ist und derart geformt ist, dass sie auf den Sockel (2) aufsteckbar ist, im aufgesteckten Zustand eine Verlängerung des Sockels (2) in Richtung der Längserstreckung der Fahrzeugscheinwerferlampe bewirkt und das Ausüben eines Drehmoments auf den Sockel (2) zum Einsetzen der Fahrzeugscheinwerferlampe in die Lampenfassung des Scheinwerfers ermöglicht.

5. Montagehilfe nach Anspruch 4, **dadurch gekennzeichnet, dass** die Befestigungsmittel mindestens ein Paar von Federelementen (3111b, 3112b) umfasst, zwischen denen der Sockel (2) mit Klemmsitz fixierbar ist.

6. Montagehilfe nach Anspruch 5, **dadurch gekennzeichnet, dass** die Federelemente (3111b, 3112b) mit Vertiefungen oder Noppen (3113, 3114) versehen sind, die zum Herstellen einer Rastverbindung mit am Sockel (2) angeordneten Befestigungsmitteln (213, 214) dienen.

7. Montagehilfe nach Anspruch 4, **dadurch gekennzeichnet, dass** Führungselemente (3111a, 3112a) vorgesehen sind, die zur lagerichtigen Befestigung der Montagehilfe (30) am Sockel (2) dienen.

8. Montagehilfe nach Anspruch 4, **dadurch gekennzeichnet, dass** ein Ende (31) der Montagehilfe (30) mit einer auf den Sockel (2) abgestimmten Aufnahme versehen ist.

9. Montagehilfe nach Anspruch 4 oder 8, **dadurch gekennzeichnet, dass** ein Ende (31) der Montagehilfe (30) klammerartig ausgebildet ist, wobei das klammerartige Ende (31) auf die Geometrie und die Maße des Sockels (2) abgestimmt ist.

10. Beleuchtungseinheit mit einer Fahrzeugscheinwerferlampe und einer Montagehilfe (30) zur Montage der Fahrzeugscheinwerferlampe in einem Fahrzeugscheinwerfer, wobei die Fahrzeugscheinwerferlampe mit mindestens einem Leuchtmittel (4, 5), das in einem Lampengefäß (1) eingeschlossen ist, und einem Sockel (2) ausgestattet ist, der mit den elektrischen Anschlüssen (3) der Lampe versehen ist, und wobei die Montagehilfe (30) derart geformt ist, dass sie auf den Sockel (2) aufsteckbar ist, im aufgesteckten Zustand eine Verlängerung des Sockels (2) in Richtung der Längserstreckung der Fahrzeugscheinwerferlampe bewirkt und das Ausüben eines Drehmoments auf den Sockel (2) zum Einsetzen der Fahrzeugscheiwerferlampe in die Lampenfassung des Scheinwerfers ermöglicht, und wobei der Sockel (2) der Fahrzeugscheinwerferlampe und die Montagehilfe mit aufeinander abgestimmten Befestigungsmitteln versehen sind.
